# DEMANDE DE BREVET EUROPEEN

(11) **EP 3 923 088 A1**
(43) Date de publication de la demande: **15.12.2021**
(21) Numéro de dépôt: 20179649.7
(22) Date de dépôt: 12.06.2020
(51) Int. Cl.: G04B 37/22, G04D 3/00

(54) **PROCÉDÉ DE FABRICATION D'UNE PIÈCE D'ORNEMENT EN MATÉRIAU DUR MUNIE D'UN REVÊTEMENT EN POLYMÈRE**

(71) Demandeur: Comadur S.A., 2400 Le Locle (CH)
(72) Inventeur: VUILLE, Pierry, 2338 Les Emibois (CH); BUBENDORF, Denis, 2022 Bevaix (CH); AREDE, Paulo, 2300 Chaux de Fonds (CH); ROMAND, Johan, 25620 Mamirolle (FR)
(74) Mandataire: ICB SA

(57) **Abrégé**

L'invention concerne une pièce d'ornement (10), par exemple d'horlogerie, de bijouterie ou de téléphonie, notamment une carrure de boîte de montre (17), et son procédé de fabrication, la pièce comprenant au moins en partie un matériau dur présentant une dureté Vickers supérieure à 1000 HV, le procédé comprenant les principales étapes suivantes :
- une étape de réalisation d'un précurseur à partir d'un mélange d'au moins un matériau en poudre avec un liant,
- une étape d'injection du précurseur dans un moule afin de former un corps vert (12),
- une étape de frittage dudit corps vert afin de former un corps (14) de la future pièce (10, 40) dans ledit matériau dur, et
- une étape de dépôt d'un revêtement (16) en matériau polymère sur une face de la pièce (10), le dépôt étant effectué par moulage sur le corps (14), notamment par injection dans un moule, le revêtement et le matériau dur étant indissociables.

## Description

### Domaine technique

L'invention se rapporte au domaine de la fabrication de pièces d'ornement, notamment en horlogerie, bijouterie ou téléphonie, la pièce étant en matériau dur avec un revêtement en polymère. Elle concerne plus précisément un procédé de fabrication d'une carrure de montre munie d'un revêtement de la face intérieur en polymère.

### Arrière-plan technologique

Dans l'industrie horlogère ou en bijouterie, des matériaux variés sont utilisés pour la fabrication de boîtes ou de bracelets d'aspect divers. Il est en particulier connu de fabriquer des pièces d'horlogerie, notamment des boîtiers de montre, en matériau dur. Par matériau dur, on entendra les matériaux présentant une dureté Vickers supérieure à 1000 HV. De tels matériaux durs sont par exemple de la céramique, du nitrure de silicium, de l'oxyde de zirconium, du saphir, ou de l'alumine.

En horlogerie, ils sont utilisés pour leurs propriétés mécaniques, en particulier parce qu'ils se rayent difficilement. Ils servent, par exemple, à fabriquer des pièces telles que des carrures de montre ou des chaînons de bracelet.

Les pièces d'ornement sont obtenues après une étape d'injection donnant la forme souhaitée à la pièce, puis par une étape de frittage pour durcir le matériau.

Cependant, ce type de procédé par injection ne permet pas d'obtenir des dimensions suffisamment précises. Par exemple, pour une carrure de montre, on a besoin d'avoir des dimensions de logement permettant d'enchâsser une glace, une lunette, ou un fond de manière à être maintenus fermement. On a aussi besoin de percer des trous pour une couronne ou des poussoirs, qui ne peuvent être obtenus avec le procédé d'injection.

Pour y parvenir, il est nécessaire d'usiner la carrure pour rectifier les dimensions de la carrure. Or, les matériaux durs sont difficiles à usiner à cause de leur dureté. A cette fin, on utilise des outils en diamant à faible durée de vie, qui engendrent des coûts importants.

### Résumé de l'invention

Il serait avantageux d'obtenir une pièce d'ornement en matériau dur, qui nécessite peu ou pas d'usinage sur le matériau dur, en particulier pour les matériaux céramiques, mais qui comprennent des surfaces fonctionnelles.

La présente invention propose ce type de procédé. Grâce à la combinaison d'un matériau dur et d'un revêtement en matériau polymère, le procédé permet d'éviter l'usinage direct du matériau dur sur des faces de la pièce. Le polymère est plus facile à usiner que le matériau dur. Ainsi, on diminue le coût de fabrication de la pièce en évitant au maximum d'usiner le matériau dur. En outre, l'étanchéité de la pièce est assurée entre le revêtement et le matériau dur.

Plus précisément, l'invention concerne un procédé de fabrication d'une pièce d'ornement, par exemple d'horlogerie, de bijouterie ou de téléphonie, notamment une carrure de montre, la pièce comprenant au moins en partie un matériau dur présentant une dureté Vickers supérieure à 1000 HV. Selon l'invention, le procédé comprend les principales étapes suivantes :
- une étape de réalisation d'un précurseur à partir d'un mélange d'au moins un matériau en poudre avec un liant,
- une étape d'injection du précurseur dans un moule afin de former un corps vert,
- une étape de frittage dudit corps vert afin de former un corps de la future pièce dans ledit matériau dur, et
- une étape de dépôt d'un revêtement en matériau polymère sur une face de la pièce, le dépôt étant effectué par moulage sur le corps, notamment par injection dans un moule, le revêtement et le matériau dur étant indissociables.

Selon un mode de réalisation particulier de l'invention, le procédé comprend une étape supplémentaire d'usinage du revêtement en matériau polymère.

Selon un mode de réalisation particulier de l'invention, le procédé comprend une étape supplémentaire d'assemblage de la pièce.

Selon un mode de réalisation particulier de l'invention, le procédé comprend une étape d'usinage du corps vert.

Selon un mode de réalisation particulier de l'invention, le corps étant muni d'une face intérieure, l'étape de dépôt consiste à déposer le revêtement sur ladite face intérieure.

Selon un mode de réalisation particulier de l'invention, un fond de la pièce est formé dans le matériau polymère pendant l'étape de dépôt du revêtement.

Selon un mode de réalisation particulier de l'invention, le polymère est à choisir dans la liste suivante : POM, PA, PUR, PPS, ABS, PC.

Selon un mode de réalisation particulier de l'invention, le matériau dur est à choisir parmi les matériaux tels que la céramique, le nitrure de silicium, l'oxyde de zirconium, le saphir, ou l'alumine.

L'invention concerne aussi une pièce d'ornement, par exemple d'horlogerie, de bijouterie ou de téléphonie, notamment une carrure de montre, comprenant un corps en matériau dur et au moins une face munie d'un revêtement en matériau polymère, le corps définissant un espace intérieur.

Selon un mode de réalisation particulier de l'invention, le revêtement a une forme fonctionnalisée.

Selon un mode de réalisation particulier de l'invention, le revêtement comporte forme des marches, notamment pour pouvoir assembler d'autres parties d'une boîte de montre par emboîtement.

Selon un mode de réalisation particulier de l'invention, le corps définit un espace interne, la face bordant ledit espace.

Selon un mode de réalisation particulier de l'invention, la face est une face intérieure du corps.

Selon un mode de réalisation particulier de l'invention, la pièce comprend un fond obtenu pendant l'étape de dépôt du revêtement.

L'invention concerne encore une boîte de montre comprenant une telle pièce d'ornement, ainsi qu'une glace et une lunette pour maintenir la glace sur la pièce, la lunette étant assemblée à la pièce par le revêtement en polymère.

### Brève description des figures :

L'invention sera mieux comprise en regard du dessin annexé dans lequel :
- la figure 1 est un schéma synoptique représentant le procédé selon l'invention,
- les figures 2a à 2f représentent des vues en perspective d'une carrure de montre après chaque étape du procédé selon l'invention,
- la figure 3 est une vue en coupe d'une boîte de montre assemblée comprenant une pièce selon un premier mode de réalisation de l'invention,
- la figure 4 est une vue en perspective retournée d'une pièce de montre selon le premier mode de réalisation de l'invention,
- la figure 5 est une vue en coupe d'une boîte de montre assemblée comprenant une pièce selon un deuxième mode de réalisation de l'invention, et
- la figure 6 est une vue est une vue en perspective retournée d'une pièce de montre selon le deuxième mode de réalisation de l'invention.

### Description détaillée de l'invention

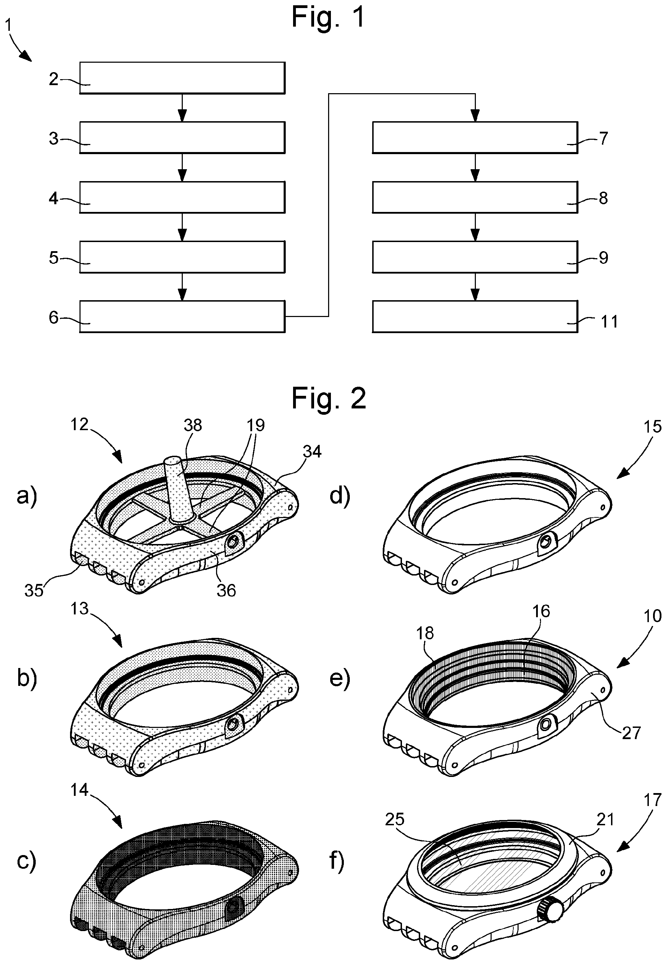

Le procédé de fabrication 1 d'une pièce d'ornement 10, par exemple d'horlogerie, de bijouterie ou de téléphonie, est représenté sur la figure 1. La pièce d'ornement est par exemple une carrure de boîte de montre telle que représentée sur les figures 2a) à 2f), une lunette, un fond de boîte de montre, une pierre ou un poussoir de pièce d'horlogerie, une bague ou un bracelet de bijouterie, ou encore une coque de téléphone mobile. La pièce 10 comprend au moins en partie un matériau dur présentant une dureté Vickers supérieure à 1000 HV. Le matériau dur est, par exemple, un matériau céramique tel qu'un oxyde d'aluminium (Al2O3), un oxyde de zirconium (ZrO2), un carbure, un nitrure, un cermet, un métal dur ou tout autre matériau de dureté Vickers supérieure à 1000 HV.

Le procédé 1 comprend une première étape de réalisation 2 d'un précurseur à partir d'un mélange d'au moins un matériau en poudre avec un liant. Dans ce contexte, la poudre à base de céramique peut comporter au moins un oxyde métallique, un nitrure métallique ou un carbure métallique. A titre d'exemple, la poudre à base de céramique peut comporter de l'oxyde d'aluminium afin de former du saphir synthétique ou un mélange d'oxyde d'aluminium et d'oxyde de chrome afin de former du rubis synthétique, ou encore de l'oxyde de zirconium. De plus, le liant peut être de natures variées comme, par exemple, de types polymères ou de types organiques.

Le procédé 1 comprend une deuxième étape d'injection 3 du précurseur dans un moule afin de former un corps vert 12. Le moule a sensiblement la forme de la pièce souhaitée compte tenu d'un coefficient de rétractation de la pièce. Le précurseur est injecté dans le moule par un tube, puis par des circuits de distribution du précurseur dans la totalité du moule. Le précurseur prend ainsi la forme du moule, par exemple une carrure de boîte de montre comme dans les exemples décrits dans la demande. En alternative, on peut aussi réaliser l'injection par nappe circulaire ou par canaux.

Une troisième étape 4 consiste à usiner le corps vert 12 pour éliminer des parties inutiles du corps vert 12 produite par l'injection. On élimine par exemple une tubulure 38 ou des canaux 19 formés à cause du tube et des circuits de distribution. Ainsi, on obtient un corps vert usiné 13.

La quatrième étape 5 a pour fonction de fritter ledit corps vert usiné 13 afin de former un corps 14 de la future pièce dans ledit au moins un matériau dur. Le frittage consiste à chauffer le précurseur pour que les grains de poudres s'agglomèrent. Pendant le frittage, le corps vert 13 durcit en se rétractant pour aboutir à un corps dur 14. Préférentiellement selon l'invention, l'étape de frittage peut comporter une pyrolyse.

Une éventuelle cinquième étape 6 sert à préparer certaines parties du corps 14 obtenu par frittage pour la suite des étapes, notamment pour préparer le corps 10 pour les finitions.

Le procédé 1 comprend une sixième étape de dépôt 7 d'un revêtement 16 en matériau polymère sur une face de la pièce, le dépôt 7 étant effectué par surmoulage du corps 14, 15, notamment par injection dans un moule. Une carrure de boîte de montre est par exemple munie d'une face intérieure 18, que l'on souhaite recouvrir d'un revêtement 16 en polymère. L'étape de dépôt 7 consiste à déposer le revêtement 16 sur ladite face intérieure 18. Ainsi, on obtient une pièce en matériau dur avec une face 18 recouverte d'un matériau polymère. Dans cette étape, le moulage d'un matériau polymère permet de former un revêtement 16 avec des dimensions plus précises qu'avec un matériau dur après frittage. Grâce au procédé, on évite d'avoir à usiner le matériau dur de la pièce 10. On peut ainsi former directement le revêtement 16 aux dimensions adéquates. En outre, les deux matériaux, le corps dur et le revêtement, sont assemblés de manière indissociable.

Le polymère est par exemple choisi dans la liste suivante : POM (pour polyoxyméthylène ou polyformaldéhyde ou polyacétal), PA (pour polyamide), PUR (pour polyuréthane), PPS (pour polysulfure de phénylène), ABS (pour acrylonitrile butadiène styrène), PC (pour polycarbonate).

Dans une septième étape 8, on peut éventuellement usiner le revêtement 16 en matériau polymère afin de modifier certaines parties, si cela est nécessaire, notamment pour permettre l'assemblage des autres éléments de la boîte.

Une huitième étape 9 peut aussi être nécessaire pour procéder à un satinage et/ou un polissage du matériau dur. Ainsi, on améliore l'aspect esthétique de la carrure.

Enfin, dans une neuvième étape 11, la pièce 10 est assemblée à d'autres éléments par emboîtement grâce au revêtement 16. Par exemple, si la pièce 10 est une carrure de montre d'horlogerie, on forme une boîte de montre 17 en assemblant une lunette 21, une glace 25 et un fond à la carrure.

Sur les figures 2a) à 2f), sont représentés des corps permettant d'aboutir à la pièce 10 d'une boîte de montre 17 après certaines étapes du procédé 1. Après la deuxième étape d'injection, tel que représenté sur la figure 2a), on obtient un corps vert 12 ayant la forme de la carrure de montre. Le corps vert décrit une portion de cylindre ouvert prolongé de part et d'autre par deux éléments opposés 34, 35 munis chacun d'un système d'attache pour y fixer un bracelet. Le corps vert 12 comporte un face interne délimitant l'espace intérieur de la portion de cylindre.

Lorsqu'il y a plusieurs points d'injection, le corps vert 12 est muni de canaux 19 reliant la face interne 18 du corps vert en un croisement central 36 agencé au centre de l'espace intérieur. Quatre canaux 18 perpendiculaires rejoignent une tubulure 38 orthogonale aux canaux 18, la tubulure 28 passant par le croisement central 36. Les canaux 18 et la tubulure 38 sont produits pendant l'étape d'injection, le précurseur étant injecté dans un moule par un tube.

Ces canaux 18 et la tubulure 38 sont supprimés pendant la troisième étape d'usinage du corps vert 12 afin d'obtenir un corps vert usiné 13 représenté sur la figure 2b). Le corps vert 12, 13 n'est pas trop dur, de sorte que l'usinage peut être réalisé sans difficulté.

Après l'étape de frittage, le corps 14 de la figure 2 c) garde sensiblement la même forme avec un coefficient de frittage, mais elle est beaucoup plus dure qu'avant. Le corps dur 14 peut ensuite être préparé pour les finitions si besoin, en formant un corps dur 15 de la figure 2d).

Sur la figure 2 e), la pièce 10 obtenue comporte un revêtement 16 en polymère sur la face intérieure 18. Le revêtement 16 a la forme souhaitée avec des dimensions précises, qui sont obtenues grâce au surmoulage. La pièce 10 représentée comprend un revêtement 16 en forme d'escalier depuis le haut de la carrure jusqu'en bas. Les différentes marches de l'escalier ont pour fonction de maintenir des éléments à l'intérieur de l'espace ou à proximité des ouvertures, tels que la couronne en haut ou un fond en bas.

Après l'assemblage, la boîte 17 de montre, représentée sur la figure 2f), comprend une carrure sur laquelle est assemblée une lunette 21 et une glace 25. La lunette 21 est maintenue emboîtée dans la première marche 27 du revêtement 16.

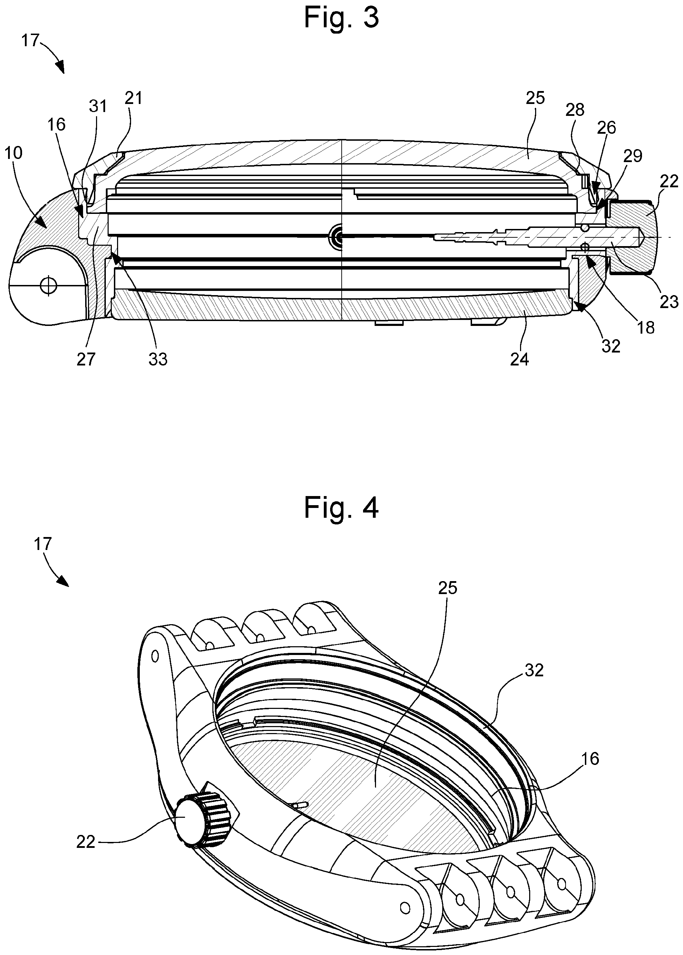

Les figure 3 et 4 montrent une boîte de montre 17 comprenant une pièce 10 en matériau dur, ici une carrure, avec un revêtement 16 en polymère sur la face interne 18 de la carrure obtenue par le procédé selon l'invention, ainsi qu'une lunette 21, une couronne 22, une tige 23, un fond 24 et une glace 25. La carrure a la même forme que celle décrite précédemment. La lunette 21 comprend une collerette 26 emboîtée dans la première marche 27 du revêtement 16. La lunette 21 repose sur le contour périphérique 28 de la glace 25 pour la maintenir sur la carrure. La glace 25 comporte un rebord 29 en périphérie, qui est agencé sous la collerette 26 de la lunette 21 en position d'assemblage. Le rebord 29 repose sur la première marche 27 du revêtement 16 et son extrémité est en contact avec la partie verticale 31 de la marche 27 du revêtement 16.

Le fond 24 de la boîte 15 est enchâssé dans le revêtement 16, le revêtement 16 comportant un retrait de matière formant une petite marche 32 pour assurer le maintien et l'étanchéité du fond 24.

La pièce 10 comprend un ergot 33 sur la face interne pour éviter que le revêtement se déplace en translation ou en rotation. L'ergot 33 est disposé à mi-hauteur de la pièce 10.

La tige 23 de couronne traverse la carrure par un orifice pour atteindre la couronne 22 agencée à l'extérieur de la pièce 10.

Dans une variante du premier mode de réalisation, le fond recouvre le revêtement pour le cacher sur la face inférieure de la carrure.

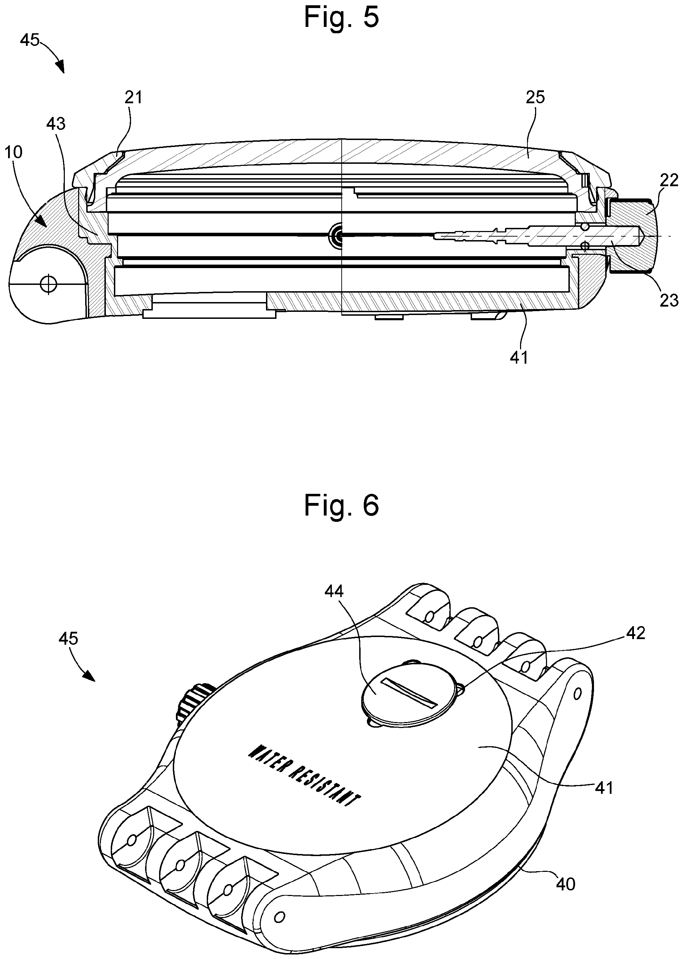

Un deuxième mode de réalisation du procédé consiste à former le fond 41 de la boîte 45 du même matériau polymère que le revêtement 43. Le revêtement 43 et le fond 41 sont monoblocs et formés lors de la même étape de dépôt. Ainsi, la pièce 40 obtenue, représentée sur les figures 5 et 6, comprend un fond 41 lorsque le procédé est terminé. Le fond 41 n'est pas amovible et comprend de préférence un logement 42 pour une pile 44. Hormis le fond 41, les autres caractéristiques sont les mêmes que celles de la carrure du premier mode de réalisation.

D'autre pièces sont réalisables grâce au procédé décrit ci-dessus. Ainsi, on peut par exemple fabriquer une lunette, un fond, une pierre ou un poussoir de pièce d'horlogerie, de même qu'une bague ou un bracelet de bijouterie, ou encore une coque de téléphone. Toutes ces pièces comportent un corps en matériau dur muni d'un revêtement en matériau polymère sur au moins une face.

## Revendications

1. Procédé de fabrication (1) d'une pièce d'ornement (10, 40), par exemple d'horlogerie, de bijouterie ou de téléphonie, notamment une carrure de boîte de montre (17, 45), la pièce comprenant au moins en partie un matériau dur présentant une dureté Vickers supérieure à 1000 HV, **caractérisé en ce que** le procédé comprend les principales étapes suivantes :
- une étape de réalisation (2) d'un précurseur à partir d'un mélange d'au moins un matériau en poudre avec un liant,
- une étape d'injection (3) du précurseur dans un moule afin de former un corps vert (12),
- une étape de frittage (4) dudit corps vert afin de former un corps (14) de la future pièce (10, 40) dans ledit matériau dur, et
- une étape de dépôt (7) d'un revêtement (16, 43) en matériau polymère sur une face de la pièce (10, 40), le dépôt étant effectué par moulage sur le corps (14, 15), notamment par injection dans un moule, le revêtement et le matériau dur étant indissociables.

2. Procédé selon la revendication 1, **caractérisé en ce qu'**il comprend une étape supplémentaire d'usinage (9) du revêtement (16, 43) en matériau polymère.

3. Procédé selon la revendication 1 ou 2, **caractérisé en ce qu'**il comprend une étape supplémentaire d'assemblage (11) de la pièce (10, 40).

4. Procédé selon l'une, quelconque, des revendications précédentes, **caractérisé en ce qu'**il comprend une étape d'usinage (3) du corps vert (12).

5. Procédé selon l'une, quelconque, des revendications précédentes, **caractérisé en ce que** le corps (14, 15) étant muni d'une face intérieure (18), l'étape de dépôt (7) consiste à déposer le revêtement (16, 43) sur ladite face intérieure (18).

6. Procédé selon l'une, quelconque, des revendications précédentes, **caractérisé en ce qu'**un fond (44) de la pièce (10, 40) est formé dans le matériau polymère pendant l'étape de dépôt (7) du revêtement (16, 43).

7. Procédé selon l'une, quelconque, des revendications précédentes, **caractérisé en ce que** le polymère est à choisir dans la liste suivante : POM, PA, PUR, PPS, ABS, PC.

8. Procédé selon l'une, quelconque, des revendications précédentes, **caractérisé en ce que** le matériau dur est à choisir parmi les matériaux tels que la céramique, le nitrure de silicium, l'oxyde de zirconium, le saphir, ou l'alumine.

9. Pièce d'ornement (10, 40), par exemple d'horlogerie, de bijouterie ou de téléphonie, notamment une carrure de montre, comprenant un corps (14, 15) en matériau dur et au moins une face (18) munie d'un revêtement (16, 43) en matériau polymère.

10. Pièce d'ornement selon la revendication 9, **caractérisée en ce que** le revêtement (16, 43) a une forme fonctionnalisée.

11. Pièce d'ornement selon la revendication 9 ou 10, **caractérisée en ce que** le corps (14, 15) définit un espace interne, la face (18) bordant ledit espace.

12. Pièce d'ornement selon l'une, quelconque, des revendications 9 à 11, **caractérisée en ce qu'**elle comprend un fond (41) obtenu pendant l'étape de dépôt (7) du revêtement (16, 43).

13. Boîte de montre (17, 45) **caractérisée en ce qu'**elle comprend une pièce d'ornement (10, 40) selon l'une, quelconque, des revendications 9 à 12, ainsi qu'une glace (25) et une lunette (21) pour maintenir la glace (25) sur la pièce (10, 40), la lunette (21) étant assemblée à la pièce (10, 40) par le revêtement (16, 43) en polymère.
